# EUROPEAN PATENT APPLICATION

(11) **EP 1 916 559 A1**
(43) Date of publication of application: **30.04.2008**
(21) Application number: 07119361.9
(22) Date of filing: 26.10.2007
(51) Int. Cl.: G02B 26/08, G02B 7/182, B81B 3/00

(54) **Micro mirrors with metal alloy hinges**

(30) Priority: 27.10.2006 US 553914
(71) Applicant: Spatial Photonics, Inc., Sunnyvale, CA 94086 (US)
(72) Inventor: Pan, Shaoher X., San Jose, CA 95120 (US)
(74) Representative: Epping - Hermann - Fischer

(57) **Abstract**

A micro mirror device includes a hinge supported by a substrate and a mirror plate tiltable around the hinge. The hinge can include an alloy selected from the group consisting of a titanium-nickel alloy having a titanium composition between about 30% to 70%, a titanium-aluminum alloy having a titanium composition between about 30% to 70%, an aluminum-copper alloy having a copper composition between about 5% to 20%, and an aluminum titanium nitride having a nitrogen composition in the range of 0 to about 15%.

## Description

### Background

The present disclosure relates to the fabrication of micro mirrors.

A spatial light modulator (SLM) can be built with an array of tiltable mirror plates having reflective surfaces. Each mirror plate can be tilted by electrostatic forces to an "on" position and an "off" position. The electrostatic forces can be generated by electric potential differences between the mirror plate and one or more electrodes underneath the mirror plate. In the "on" position, the micro mirror plate can reflect incident light to form an image pixel in a display image. In the "off" position, the micro mirror plate directs incident light away from the display image.

### Summary

In one general aspect, the present invention relates to a micro mirror device that includes a hinge supported by a substrate and a mirror plate tiltable around the hinge. The hinge can include a material selected from the group consisting of a titanium-nickel alloy having a titanium composition between about 30% and 70%, a titanium-aluminum alloy having a titanium composition between about 30% and 70%, an aluminum-copper alloy having a copper composition between about 5% and 20%, and an aluminum titanium nitride having a nitrogen composition between about 0 and 15%.

In another general aspect, the present invention relates to a micro mirror device that includes a hinge support post on a substrate; a hinge connected to the hinge support post; and a mirror plate connected to the hinge and tiltable around the hinge. The hinge can include a material selected from the group consisting of a titanium-nickel alloy having a titanium composition about 30% and 70%, a titanium-aluminum alloy having a titanium composition between about 30% and 70%, an aluminum-copper alloy having a copper composition between about 5% and 20%, and an aluminum titanium nitride having a nitrogen composition between about 0 and 15%.

In another general aspect, the present invention relates to a micro mirror device that includes a hinge supported by a substrate, a mirror plate tiltable around the hinge, and a controller that can produce an electric signal to hold the mirror plate at a titled orientation at or above 2 degrees relative to the surface of the substrate without causing the mirror plate to contact any structure on the substrate other than the hinge. The hinge can be configured to elastically restore the mirror plate to be substantially parallel to the substrate from the tilted orientation.

In another general aspect, the present invention relates to a micro mirror device that includes a hinge supported by a substrate; a mirror plate tiltable around the hinge, wherein the hinge is configured to produce an elastic restoring force on the mirror plate when the mirror plate is tilted; and a controller that can produce an electrostatic force to overcome the elastic restoring force to tilt the mirror plate from the un-tilted position to an "on" position or an "off" position. The electrostatic force is configured to counter the elastic restoring force to hold the mirror plate at the "on" position or the "off" position.

In another general aspect, the present invention relates to a method for controlling the tilt movement of a mirror plate. The method includes producing an electrostatic force on a mirror plate tiltable around a hinge supported by a substrate. The hinge can produce an elastic restoring force on the mirror plate when the mirror plate is tilted. The method also includes overcoming the elastic restoring force to tilt the mirror plate from an un-tilted position to an "on" position or an "off" position and holding the mirror plate at the "on" position or the "off" position in balance with the elastic restoring force.

Implementations of the system may include one or more of the following. The tilted orientation can be at or above 3 degrees relative to the surface of the substrate and the hinge is configured to elastically restore the mirror plate to be substantially parallel to the substrate from the tilted orientation. The tilted orientation can be at or above 4 degrees relative to the surface of the substrate and the hinge can elastically restore the mirror plate to be substantially parallel to the substrate from the tilted orientation. The hinge can include an alloy selected from the group consisting of a titanium-nickel alloy having a titanium composition between about 30% and 70%, a titanium-aluminum alloy having a titanium composition between about 30% and 70%, an aluminum-copper alloy having a copper composition between about 5% and 20%, and a aluminum titanium nitride having a nitrogen composition between about 0 and 15%. The hinge can include the aluminum-titanium-nitrogen compound. The aluminum and the titanium in the aluminum titanium nitride can have approximately equal compositions. The nitrogen composition in the aluminum titanium nitride can be between about 0 and 10%. The hinge can include the titanium-nickel alloy. The titanium composition in the titanium-nickel alloy can be between about 40% and 60%. The titanium composition in the titanium-nickel alloy can be between about 45% and 55%. The hinge can include the titanium-aluminum alloy. The titanium composition in the titanium-aluminum alloy can be between about 40% and 60%. The titanium composition in the titanium-aluminum alloy can be between about 45% and 55%.

Implementations of the system may include one or more of the following. The hinge can include the aluminum-titanium-nitrogen compound. The aluminum and the titanium in the aluminum titanium nitride have approximately equal compositions. The nitrogen composition in the aluminum titanium nitride can be between about 0 and 10%. The hinge can include the titanium-nickel alloy. The titanium composition in the titanium-nickel alloy can be between about 40% and 60%. The titanium composition in the titanium-nickel alloy can be between about 45% and 55%. The hinge can include the titanium-aluminum alloy. The titanium composition in the titanium-aluminum alloy can be between about 40% and 60%. The titanium composition in the titanium-aluminum alloy can be between about 45% and 55%. The hinge can elastically restore the mirror plate from a first orientation at or above 2 degrees, 3 degrees or 4 degrees relative to the surface of the substrate to a second orientation substantially parallel to the substrate. The micro mirror device can further include a controller configured to produce an electric signal to hold the mirror plate at an orientation at or above 2 degrees, 3 degrees or 4 degrees relative to the surface of the substrate. The micro mirror device can further include a mechanical stop on the substrate, the mechanical stop being configured to contact the mirror plate to stop the tilt movement of the mirror plate. The hinge can include an aluminum-copper alloy.

Implementations may include one or more of the following advantages. The present specification discloses hinge materials suitable for contact and non-contact micro mirrors. The hinge materials selected for the contact micro mirrors have relatively low elastic constant. The electrostatic force tilting the mirror plate can easily overcome the elastic restoring force of the hinge so the mirror plate can be easily tilted to contact a mechanical stop. The hinge materials selected for the non-contact micro mirrors have relatively high elastic constant, which allows the elastic restoring force to balance the electrostatic force and hold the mirror plate at a tilt angle that defines an "on" position or an "off" position. The elastic restoring force can also restore the tilted mirror plate to an un-tilted position after the electrostatic force is reduced or removed.

The present specification also provides a simplified structure for a tiltable mirror plate on a substrate and methods for driving the tiltable mirror plate. The tiltable mirror plate can be tilted to and held at predetermined angles in response to electric signals provided by a controller. No mechanical stop is required on the substrate or on the mirror plate to stop the tilted mirror plate and define the tilt angles of the mirror plate. Eliminating mechanical stops can simplify a micro mirror device, when compared to some conventional micro mirror devices with mechanical stops. The lack of mechanical contact between the mirror plate and a structure, e.g., a mechanical stop, on the substrate, may also remove the problem of stiction that is known to exist between a mirror plate and mechanical stops in convention mirror devices. Mirror plate devices described herein may tilt to a narrower angle than mirror plates in conventional devices. Less mirror plate tilting can cause less strain on the hinge around which the mirror plate rotates. Such devices may be less likely to experience mechanical breakdown. Thus, the useful lifetime of the device may be longer. Further, because the hinge is not required to rotate as much as in conventional devices, a greater variety of materials may be selected for hinge formation. Moreover, because the mirror plate undergoes a smaller angular deflection, it can operate at higher frequencies.

Although the invention has been particularly shown and described with reference to multiple embodiments, it will be understood by persons skilled in the relevant art that various changes in form and details can be made therein without departing from the spirit and scope of the invention.

The present application claims the priority of the US patent application 11/553,914 filed October 27, 2006. The disclosure content of this application is hereby incorporated by reference.

### Brief description of the drawings

The following drawings, which are incorporated in and form a part of the specification, illustrate embodiments of the present invention and, together with the description, serve to explain the principles of the invention.
FIG. 1 is a perspective view of a micro mirror suitable for operating in a non-contact mode.
FIG. 2 is an expanded view of the micro mirror of FIG. 1.
FIG. 3 is a side view of the micro mirror of FIG. 1.
FIGS. 4A and 4B illustrate the reflections of incident light in the "on" direction and the "off' direction respectively by the tilted mirror plate.
FIG. 5 illustrates the reflection of a laser-emitted incident light by a tilted mirror plate.
FIG. 6 illustrates the reflection of a light-emitting-diode emitted incident light by a tilted mirror plate.
FIG. 7 illustrates an arrangement of an image projection system including micro mirrors.
FIG. 8 illustrates the temporal profiles of the driving voltage pulses and the resulting tilt angles in the mirror plate.
FIG. 9 is a perspective view of a micro mirror suitable for operating in a contact mode.
FIG. 10 is a side view of the micro mirror of FIG. 9.
FIG. 11 is a graph illustrating a response curve of the tilt angle of a mirror plate as a function of the driving voltage for contact and non-contact micro mirrors.
FIG. 12 is a graph illustrating the operation regions of non-contact and contact micro mirrors in a stress-elongation plot.
FIG. 13 is a graph illustrating response curves of the mirror-plate tilt angle as a function of a normalized driving voltage for a hinge component having different material compositions.
FIG. 14 is a graph illustrating response curves of the mirror-plate tilt angle as a function of the driving voltage for a hinge component having different material compositions.

### Detailed description

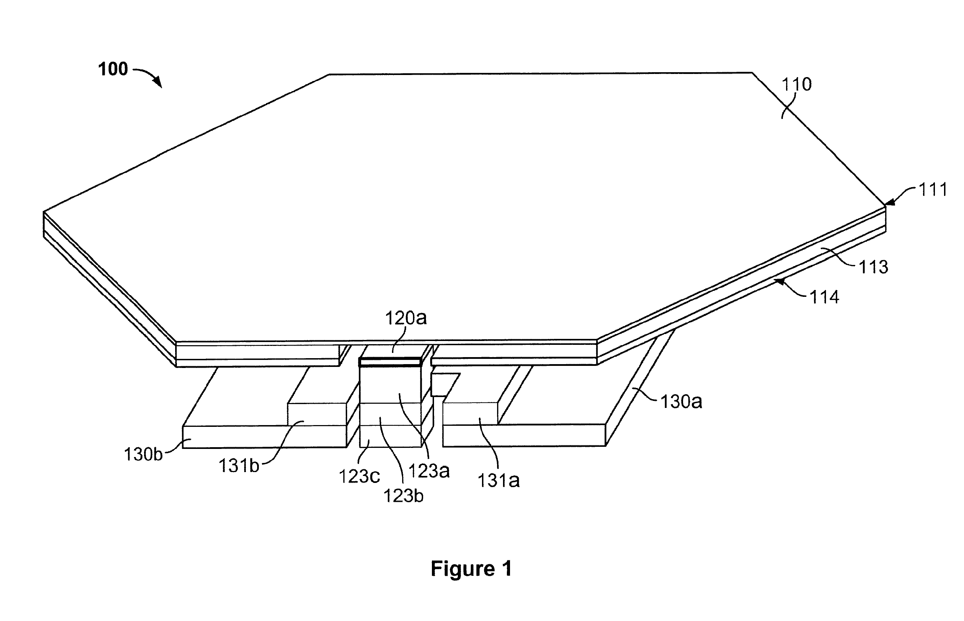

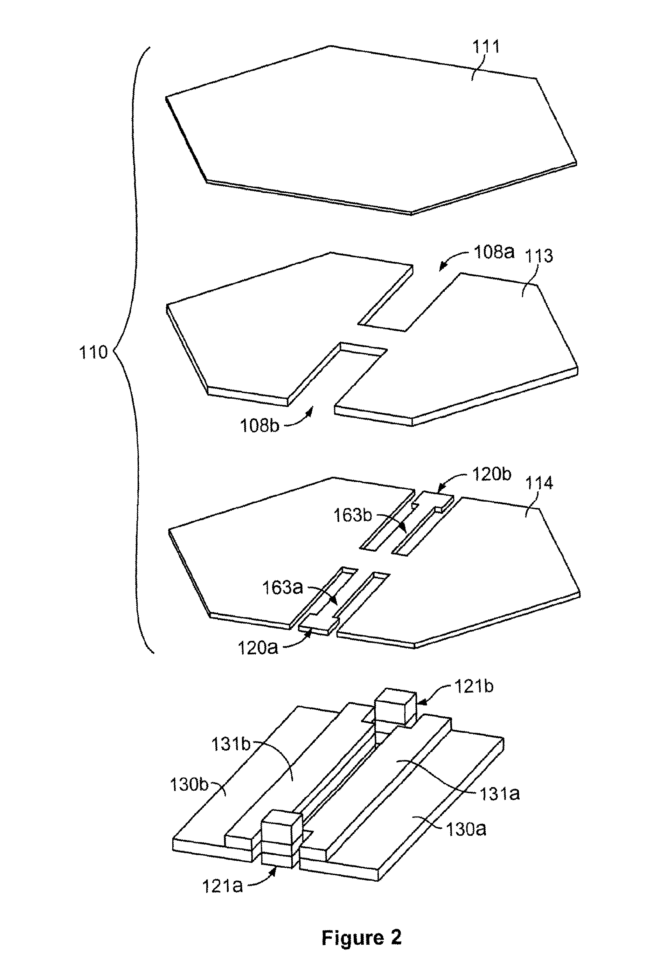

Referring to FIGS. 1-3, a micro mirror 100 can include a mirror plate 110 over a substrate 300. The mirror plate 110 can include a reflective layer 111, a spacer layer 113, and a hinge layer 114. In some embodiments, the spacer layer 113 includes a pair of openings 108a and 108b. In some embodiments, the hinge layer 114 includes two hinge components 120a and 120b. The hinge components 120a and 120b are connected with the main portion of the hinge layer 114 by elongated hinges 163a and 163b respectively. The elongated hinges 163a and 163b are separated from the main portion of the hinge layer 114 by gaps on the two sides of the elongated hinges 163a or 163b. The mirror plate 110 is at an un-tilted position with an external force being applied to the mirror plate 110. The un-tilted position can be substantially parallel to the upper surface of the substrate. The mirror plate 110 can be tilted about an axis defined by the two hinge components 120a and 120b. One hinge component 120a (or 120b) is connected to a hinge support post 121a (or 121b) on the substrate 300. The hinge support post 121a can be formed by an unitary object, or include two or three portions. For example, the hinge support post 121 a can include an upper portion 123a, a middle portion 123b, and a lower portion 123c that can be formed in separate deposition steps.

The micro mirror 100 can further include a two-part electrode with lower portion 130a and upper portion 131 a on one side of the hinge support posts 121 a, 121b, and another two-part electrode with lower portion 130b and upper portion 131b on another side of the hinge support posts 121a, 121b. The electrode lower portions 130a, 130b can be formed from one conductive layer. The electrode upper portions 131a, 131b can be formed from another conductive layer over the electrode lower portions 130a, 130b. The hinge support posts 121a, 121b are connected to a control line 311, the two-part electrode 130a, 131a is connected to a control line 312, and the two-part electrode 130b, 131b is connected to a control line 313. The electric potentials of the control lines 311, 312, 313 can be separately controlled by external electric signals provided by a controller 350. The potential difference between the mirror plate 110 and the two-part electrodes 130a, 131a or two-part electrodes 130b, 131b can produce an electrostatic torque that can tilt the mirror plate 110. Suitable micro mirror devices are described further in U.S. Publication No. 2005-0128564, "High Contrast Spatial Light Modulator and Method", filed October 26, 2004, and U.S. Application No. 11/470,568, "Spatial Light Modulator Multi-layer Mirror Plate", filed September 6, 2006, which are incorporated by reference herein for all purposes.

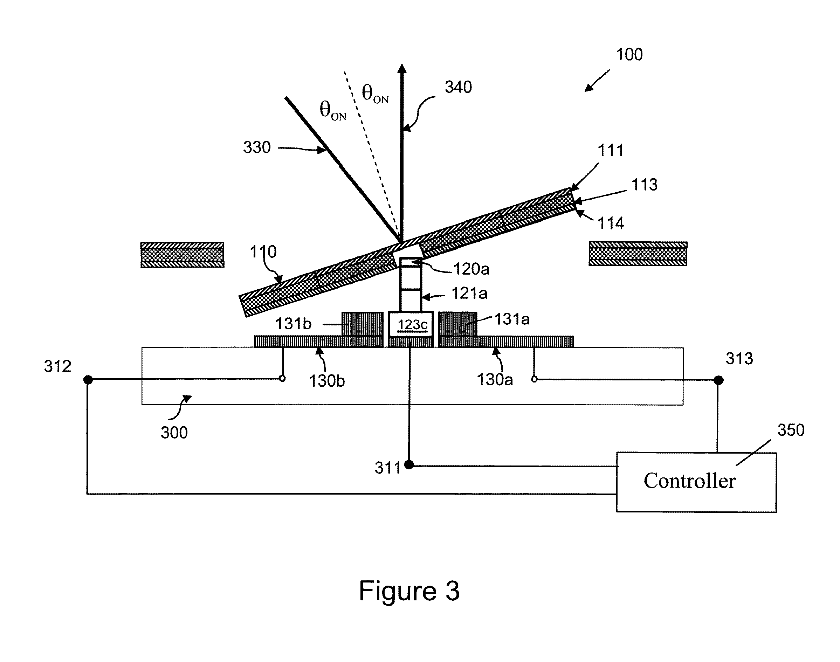

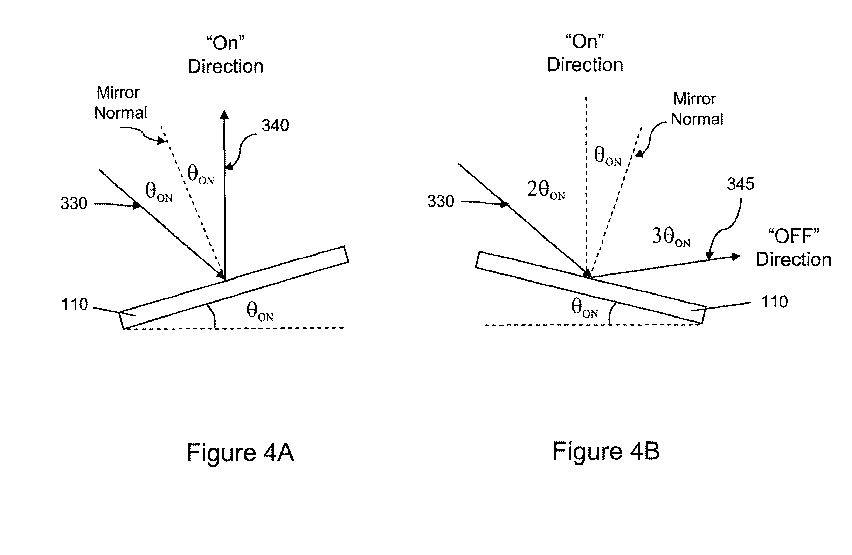

Referring to FIGS. 3 and 4A, the controller 350 can produce an electrostatic force to overcome an elastic restoring force produced by the distorted elongated hinges 163a or 163b to tilt the mirror plate from the un-tilted position to an "on" position or an "off" position. The electrostatic force can counter the elastic restoring force to hold the mirror plate at the "on" position or the "off" position. The un-tilted position can be different from the "on" position and the "off" position. In some embodiments, the un-tilted position can also be the same as the "on" or the "off" positions. The mirror plate 110 can tilt in one direction from the un-tilted position to a tilt angle θₒₙ relative to the substrate 300. The mirror plate 110 can reflect an incident light 330 to form reflected light 340 traveling in the "on" direction such that the reflected light 340 can arrive at a display area to form display image. The "on" direction is typically perpendicular to the substrate 300. Since the incident angle (i.e., the angle between the incident light 330 and the mirror normal direction) and the reflection angle (i.e. the angle between the reflected light 340 and the mirror normal direction) are the same, the incident light 330 and the reflected light 340 form an angle 2θₒₙ that is twice as large as the tilt angle θₒₙ of the mirror plate 110.

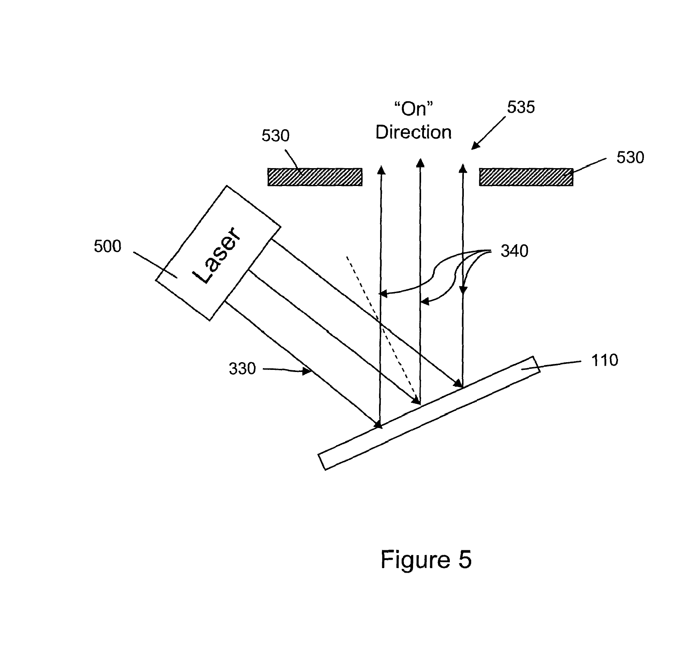

Referring to FIG. 4B, the mirror plate 110 can symmetrically tilt in the opposite direction to an orientation also at a tilt angle θₒₙ relative to the substrate 300. The mirror plate 110 can reflect the incident light 330 to form reflected light 345 traveling in an "off' direction. The reflected light 345 can be blocked by an aperture (530 in FIGS. 5-7) and absorbed by a light absorber. Because the incident angle for the incident light 330 is 36ₒₙ, the reflection angle should also be 3θₒₙ. Thus the angle between the reflected lights 340 in the "on" and the "off" directions is 4θₒₙ, four times as large as the tile angle θₒₙ of the mirror plate 110.

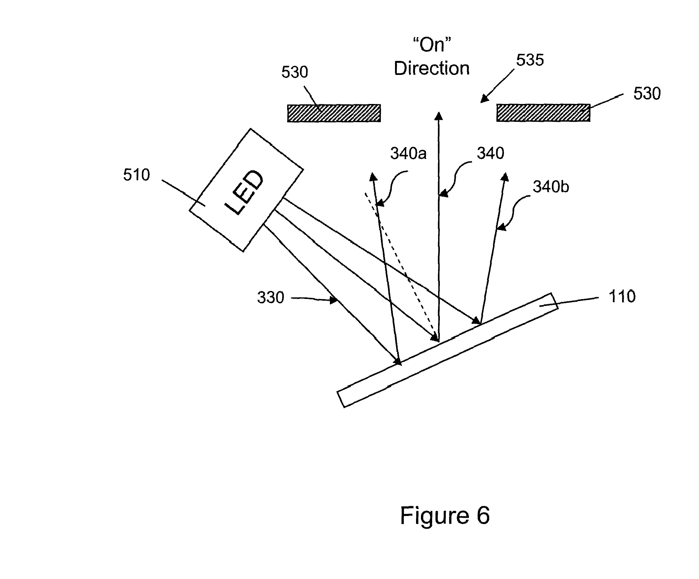

The incident light 330 can be provided by different light sources, such as a laser 500 or light emitting diode (LED) 510, as respectively shown in FIGS. 5 and 6. The incident light emitted by the laser 500 is coherent and can remain collimated after the reflection by the mirror plate 110. An aperture 530, the laser 500, and the mirror plate 110 can be arranged such that almost all the reflected light 340 reflected by the mirror plate 110 when tilted in the "on" direction passes through an opening 535 in the aperture 530. The incident light 330 emitted from the LED 510 is generally non-coherent and tends to diverge over distance. The aperture 530, the LED 510, and the mirror plate 110 can be arranged such that a majority of the light reflected by the mirror plate 110 at the "on" position passes through the opening 535 in the aperture 530. For example, the reflected light 340 can go through the opening 535, while the reflected light 340a and 340b, which diverges away from reflected light 340 is blocked by the aperture 530.

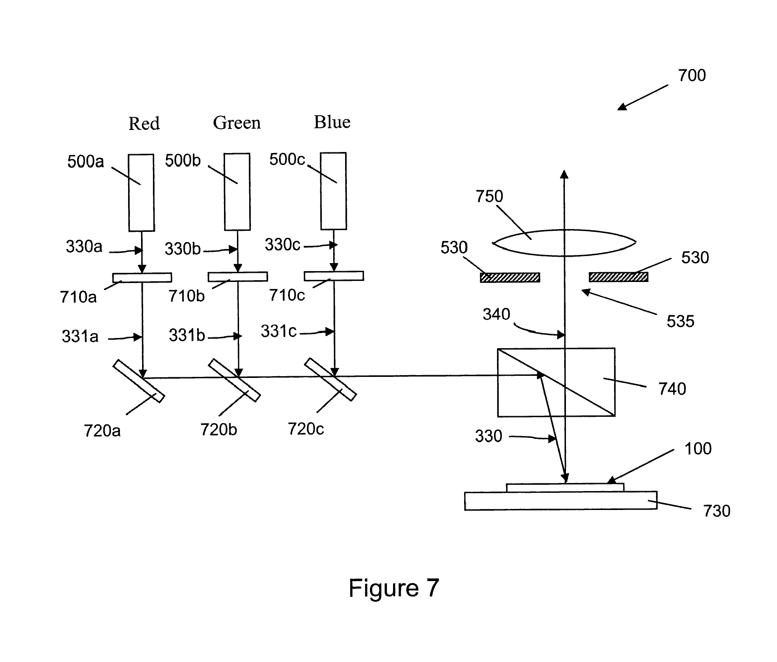

An exemplary image projection system 700 based on an array of micro mirrors 100 is shown in FIG. 7. Red, green, and blue lasers 500a, 500b and 500c can respectively emit red, green, and blue colored laser beams 330a, 330b, and 330c. The red, green, and blue colored light 330a, 330b, and 330c can pass through diffusers 710a, 710b, and 710c to form colored light 331a, 331b, and 331c. The diffusers 710a, 710b, and 710c can resize (e.g. expand) and can shape the laser beams 330a, 330b, and 330c to cross-sectional shapes that are compatible with the array of micro mirrors 100. For example, the colored light 331a, 331b, and 331c can be shaped to be rectangular, which can be more compatible with the shape of the array of micro mirrors 100. The colored light 331a, 331b, and 331c can then be reflected by beam splitters 720a, 720b, and 720c (which function as beam combiners), and merged into a color incident light 330. The color incident light 330 can be reflected by a total internal reflection (TIR) prism 740 to illuminate micro mirrors 100 on a support member 730. The reflected light 340 deflected by the mirror plates 110 at the "on" positions can pass through the TIR prism 740 and the opening 535 of the aperture 530, and to be projected by a projection system 750 to form a display image.

The relative locations of the aperture 530, the TIR prism 740, and the micro mirror 100 can be arranged such that almost all the reflected light 340 in the "on" direction can pass the opening 535 and all the reflected light 345 in the "off" direction can be blocked by the aperture 530. Any portion of the reflected light 340 blocked by the aperture 530 is a loss in the display brightness. Any stray reflected light 535 that passes through the opening 535 will decrease the contrast of the display image. The larger the angular spread between the reflected light 340 and the reflected light 345, the easier it is to separate the reflected light 340 and the reflected light 345 to achieve the maximum brightness and contrast in the display image. In other words, the larger the tilt angles θₒₙ (or θ_{off}) in the display system 700, the easier it is to separate the reflected light 340 and the reflected light 345 such that substantially all the reflected light 345 is blocked and substantially all the reflected light 340 can arrive at the display surface to form the display image.

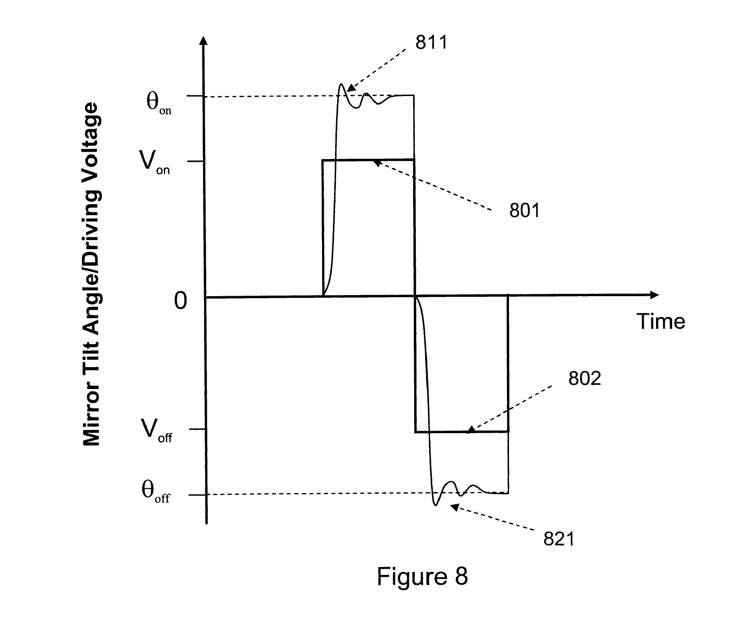

A positive driving voltage pulse 801 and a negative driving voltage pulse are shown in Figure 8. A zero tilt angle corresponds to the horizontal orientation at which the mirror plate 110 is parallel to the surface of the substrate 300. The positive driving voltage pulse 801 includes a driving voltage Vₒₙ and is used to control the mirror plate 110 to the "on" position, as shown in FIGS. 3, 4A, 5, and 6.The positive voltage pulse 801 can create an electrostatic force that tilts the mirror plate 110 in the "on" direction, which is a counter clockwise direction in the figures, to a tilt angle θₒₙ relative to the upper surface of the substrate 300. The mirror plate 110 does not experience any elastic restoring force at the non-tilt state. As the mirror plate 110 tilts, the mirror plate 110 experiences an elastic restoring force, created by the torsional distortion of the elongated hinges 163a or 163b, which applies a force on the mirror plate 110 in the clockwise direction. Although the electrostatic force increases somewhat as the tilt angle increases, the elastic restoring force increases more rapidly as a function of the tilt angle than the electrostatic force. The mirror plate 110 eventually stops at the tilt angle θₒₙ when the elastic restoring force becomes equal to the electrostatic force. In other words, the mirror plate 110 is held at the tilt angle θ₀ₙ by a balance between the electrostatic force and the elastic restoring force that apply forces on the mirror plate 110 in the opposite directions. The mirror plate 110 may initially oscillate around the average tilt angle θₒₙ in a region 811 and subsequently settle to stay at the tilt angle θₒₙ.

Similarly, a negative driving voltage pulse 802 is used to control the mirror plate 110 to the "off" position, as shown in FIGS. 4B. The voltage pulse 802 includes a driving voltage V_{off}. The voltage pulse 802 can create an electrostatic force to tilt the mirror plate 110 in the "off" direction, which is a clockwise direction in the figures, to a tilt angle θ_{off} relative to the upper surface of the substrate 300. The mirror plate does not experience any elastic restoring force at the non-tilt position. As the tilt angle increases, the elastic restoring force is created by the torsional distortions of the elongated hinges 163a or 163b, which applies a force that is in a counter clockwise direction. The elastic restoring force increases more rapidly as a function of the tilt angle than the electrostatic force. The mirror plate 110 eventually stops at the tilt angle θ_{off} when the elastic restoring force becomes equal to the electrostatic force. The mirror plate 110 is held at the tilt angle θ_{OFF} by a balance between the electrostatic force created by the negative voltage pulse 802 and the elastic restoring force by the distorted elongated hinges 163a and 163b. The mirror plate 110 may initially oscillate around the average tilt angle θ_{off} in a region 821 and then settle to stay at the tilt angle θ_{off}. In the configurations shown in FIGS. 4A and 4B, the tilt angles θₒₙ and θ_{off} have equal magnitude. After the negative driving voltage pulse 802 is removed, the mirror plate 110 can be elastically pulled back to zero tilt angle (i.e. the horizontal orientation) by the elongated hinges 163a and 163b.

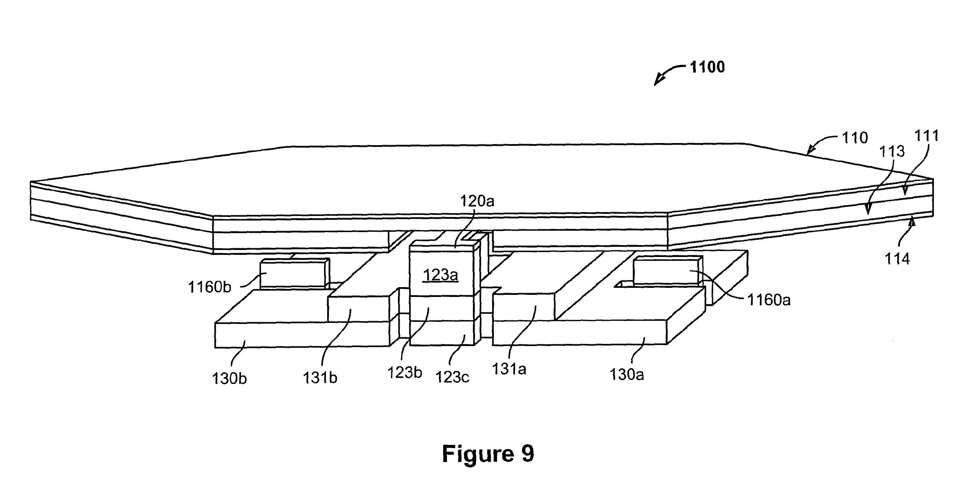

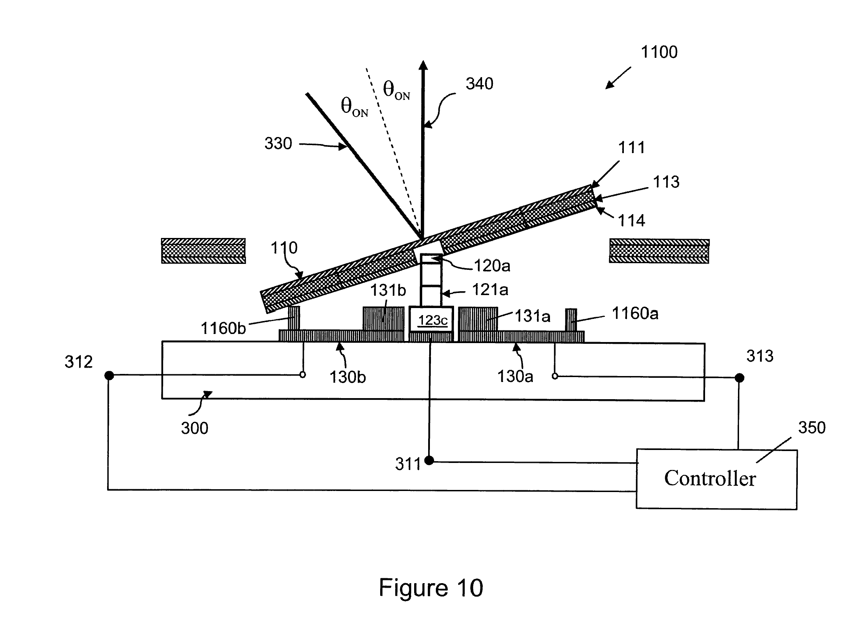

Referring to FIGS. 9 and 10, a mirror plate 1100 suitable for operating in a contact mode can include mechanical stops 1360a and 1360b on the substrate 300. The mechanical stops 1360a and 1360b can contact the tilted mirror plate 1100 to stop the tilt movement in the clockwise and the counter clockwise direction. The "on" and the "off" positions of the mirror plate 110 are defined when the mirror plate 110 is in contact with the mechanical stops 1360a and 1360b. The orientation of the mirror plate 110 at the "on" position determines the direction of the reflected light 340. The micro mirror 1100 can also include many of the same components as the non-contact type micro mirror 100. In some embodiments, the mechanical stops 1360a and 1360b can be electrically conductive. The mechanical stops 1360a and 1360b can be connected to the control line 311 (not shown in FIG. 10) such that the mechanical stops 1360a and 1360b can be held at the same electric potential as the hinge layer 114 of the mirror plate 110 by an electric signal from the controller 350. The equal potential at the mechanical stops 1360a and 1360b and the hinge layer 114 can prevent electric current flowing across the interface between the hinge layer 114 and the mechanical stops 1360a and 1360b when they are in contact. The electric potential of the mirror plate 110 and thus the electrostatic force applied to the mirror plate 110 are not disturbed by the contact with the mechanical stops 1360a and 1360b.

In the present specification, the micro mirror 100 is referred to as a "non-contact" micro mirror. The micro mirror 1100 is referred to as a "contact" micro mirror. The tilt movement of a mirror plate in a "contact" micro mirror can be stopped by mechanical stops. The "on" and "off" positions of the mirror plate are defined by the mirror plate's orientations when it is in contact with the mechanical stops. In contrast, the non-contact micro mirror 100 does not include mechanical stops that can limit the tilt movement of the mirror plate. Rather, the "on" and "off" positions of the mirror plate are controlled by a driving voltage applied to the mirror plate 110 and the two-part electrodes 130a, 131a, 130b, and 131b.

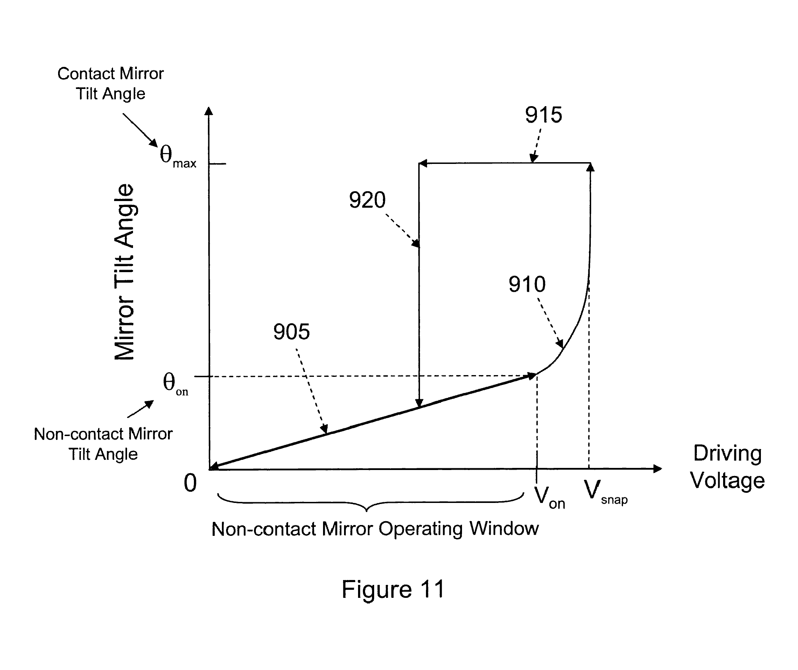

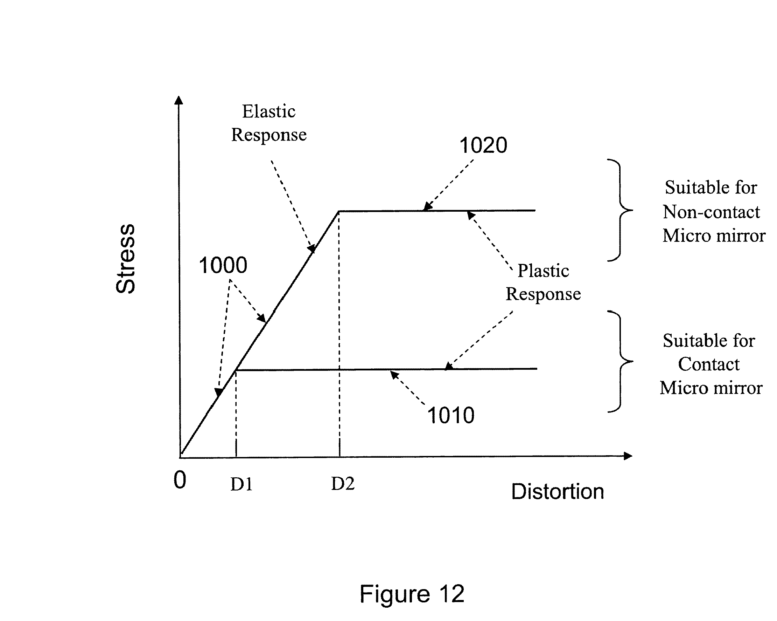

A response curve of the tilt angle of a mirror plate as a function of a driving voltage is shown in FIG. 11. The tilt angle of the mirror plate first gradually increases as a function of the driving voltage along a curve 905. The tilt angle then rapidly increases along a curve 910 as the driving voltage increases until the mirror plate "snaps" at a snapping voltage Vₛₙₐₚ at which the elastic restoring force stops increasing as the tilt angle increases. The electrostatic force continues to increase as the tilt angle increases. The imbalance between the stronger electrostatic force and the constant plastic restoring force (as shown in FIG. 12) sharply increases the tilt angle to θₘₐₓ at which the tilt movement of the mirror plate is stopped by a mechanical stop 1160a and 1160b on the substrate 300, as shown in FIG. 10. In the present specification, the term "snap" refers to the unstable state of imbalanced mirror plate of the mirror plate wherein the mirror plate rapidly tilts until it is stopped by another fixed object.

The "snapping" of the mirror plate is a result of the mechanical properties of the hinge in a micro mirror. Referring to FIG. 12, stress on a mirror plate can be caused, for example, by an electrostatic force between the mirror plate and an electrode on the substrate. The distortion of a hinge increases with stress along the curve 1000 in the low stress range. The curve 1000 represents the hinge's elastic response to the stress. In one exemplary micro mirror, the hinge snaps at a distortion D1. In other words, the elastic restoring force stops increasing as the tilt angle increase above the tilt angle corresponding to D1. The curve 1010 represents a plastic region of the hinge material. The hinge material corresponding to curve 1010 is thus more suitable for the contact-type micro mirror 1100 shown in FIGS. 9 and 10.

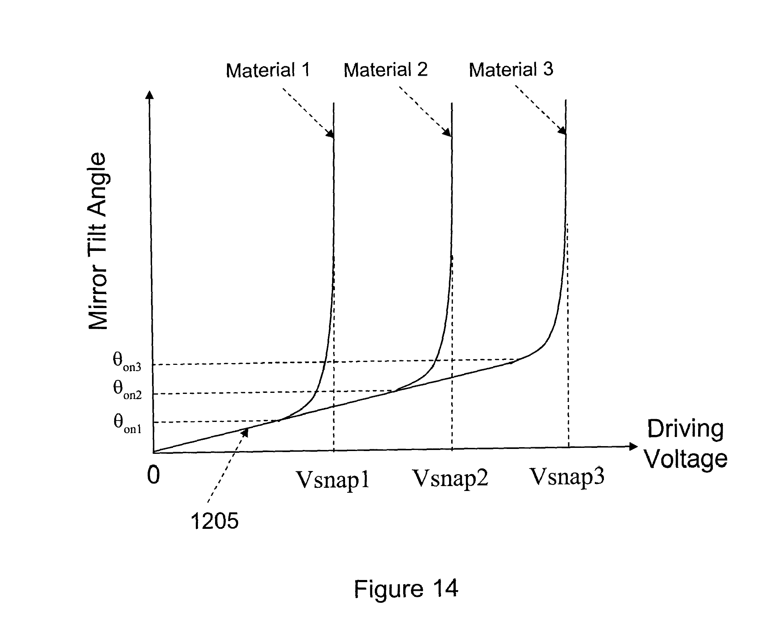

As discussed previously in relation with FIG. 7, non-contact micro mirrors preferably have large tilt angles such as about 2°, about 3°, about 4°, about 5°, or higher for optimal brightness and contrast in the display images. A large "on" or "off" tilt angle requires a wide angular range in which the mirror plate can be tilted and then can be elastically restored by the hinge back to the non-tilt position. FIG. 12 shows another exemplary micro mirror that transitions from the elastic response curve 1000 to a plastic response curve 1020 at a distortion D2 > D1. The micro mirror has a wider range for elastic hinge distortion and is thus more suitable for the non-contact mirror plate 100. The difference in D2 and D1 can result from differences in hinge material compositions of the mirror plates 110 and 1100 (as shown in FIG. 14). A contact micro mirror 1100, in contrast, preferably has a narrow range for elastic hinge distortion such that a relatively small driving voltage can snap the mirror plate to cause the plate to contact the mechanical stops. The micro mirror corresponding to the plastic curve 1010 is thus more suitable for a contact micro mirror. One example of a hinge material suitable for the non-contact micro mirror in the micro mirror 100 is an aluminum titanium nitride that has a nitrogen composition can be in the range of about 0 to 15%, or 0 to 10%, and approximately equal compositions for aluminum and titanium. One example for the hinge material made of the aluminum titanium nitride is Al_{48%} Ti_{48%} Ti_{4%}. The aluminum copper alloy is more suitable for hinge material for a contact micro mirror 1100. An exemplified aluminum copper alloy can include 90% aluminum and 10% copper.

Referring back to FIG. 11, after the mirror plate 110 in the micro mirror 1100 snaps at the tilt angle θₘₐₓ, the mirror plate initially stays in contact with the mechanical stop 1160a or 1160b within the drive voltage range indicated by line 915 when the driving voltage decreases. After the hinge returns to an elastic region, restores its elasticity, and can overcome stiction at the mechanical stop 1160a or 1160b, the mirror plate 1100 finally tilts back the response curve 905 when the drive voltage intersects with the line 920. The hysteresis represented by the curves 905 and 910 and lines 915 and 920 is a common property of the contact micro mirrors. The operational window for a non-contact micro mirror 100 is along the curve 905 in the elastic region of the mirror plate. The mirror plate can be tilted and held at a tilt angle θₒₙ or θ_{off} by a driving voltage Vₒₙ. The mirror plate 110 in the micro mirror 100 can be elastically restored back to the original position by the hinges 163a and 163b along the same the response curve 905 after the electrostatic force is removed. There is no substantial hysteresis associated with the non-contact micro mirror 100 disclosed in the present specification.

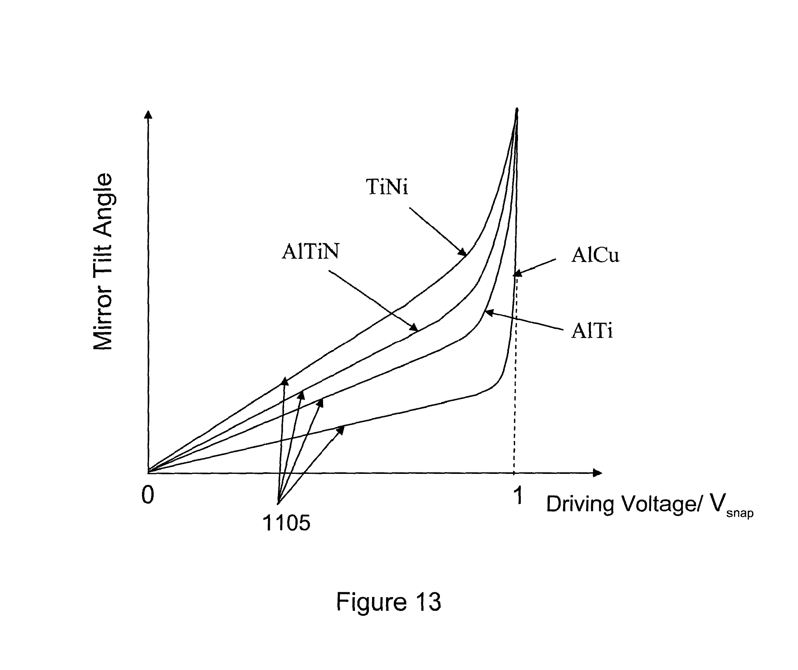

FIG. 13 illustrates response curves of mirror-plate tilt angle as a function of driving voltage for hinges having different material compositions. The normalized driving voltage is simply the driving voltage divided by the mirror-snapping voltage. The mirror-plate tilt angles for hinges having the different material compositions can rise along different curves 1105 as a function of the normalized driving voltage. The tilt angles are higher for hinges made of TiNi alloy, AlTiN compound, and AlTi alloy than for hinges made of AlCu. The above described hinge materials suitable for the non-contact micro mirrors can include the following exemplified compositions: Ti_{50%}Ni_{50%} for the TiNi alloy, Al_{48%}Ti_{48%}N_{4%} for the AlTiN compound, Al_{50%}Ti_{50%} for the AlTi alloy. The AlCu alloy is more suitable for the contact micro mirrors. The AlCu alloy can include about 70% to 95% aluminum, or 90% aluminum and 10% copper.

As described above, the mirror plates can be tilted in the angular ranges as defined by the cures 1105 and elastically restored to their respective non-tilt positions. The ranges of the tilt angles available for the curves 1105, at which the non-contact micro mirrors operate, are different for the three depicted material compositions. In the particular examples depicted in FIG. 13, the hinge made of TiNi allows a non-contact mirror plate to tilt and elastically restore in a wider angular range than the other two hinge material compositions. The hinge made of AlCu allows a contact mirror plate to overcome elastic restoring force and tilt rapidly to a mechanical stop.

The hinge materials compatible with the micro mirror can include a range of materials such as titanium, gold, silver, nickel, iron, cobalt, copper, aluminum, nitrogen, and oxygen. The hinges can be made of TiNi, wherein the titanium composition can be between about 30% and 70%, or between about 40% and 60%, or between about 45% and 55%. The hinges can be made of AlTi, wherein the titanium composition can be between about 30% and 70%, or between about 40% and 60%, or between about 45% and 55%. The suitable hinge material for the "non-contact" micro mirror can also include aluminum titanium nitride that has a nitrogen composition in the range of 0 to 10%, or 0 to 15%, and approximately equal compositions for aluminum and titanium. A hinge composed of an aluminum titanium nitride can be substantially free of other elements (in this context, substantially free means that other elements might be present in trace amounts consistent with the fabrication process), and in particular can be substantially free of oxygen.

Referring to FIG. 14, the mirror-plate tilt angles having hinges made of three different materials Material 1, Material 2, and Material 3 may initially gradually rise along the same curve 1205. The snap voltages Vₛₙₐₚ₁, Vₛₙₐₚ₂ and Vₛₙₐₚ₃ for the hinge Material 1, Material 2, and Material 3 may be different: Vₛₙₐₚ₁ < Vₛₙₐₚ₂ < Vₛₙₐₚ₃. The operational windows for non-contact tilt angles θₒₙ₁, θₒₙ₂, and θₒₙ₃ corresponding to the hinge three materials are also different: θₒₙ₁ < θₒₙ₂ < θₒₙ₃. In the examples depicted in FIG. 14, Material 3 is more preferred as the hinge material for the non-contact micro mirrors because it can provide the largest angular range for the mirror plate's tilt and restoring to the non-tilt position. For example, the hinge made of the Material 3 can elastically restore the mirror plate from a first orientation at or above 2 degrees, 3 degrees, or 4 degrees, relative to the non-tilt position. Material 1 is more suitable for contact micro mirrors such as the micro mirror 1100 shown in FIGS. 9 and 10.

The above disclosed methods can be used for selecting hinge materials suitable for contact and non-contact micro mirrors. The hinge materials having relatively low elastic constant can be selected for the contact micro mirrors. The electrostatic force tilting the mirror plate can easily overcome the elastic restoring force of the hinge so the mirror plate can be easily tilted to contact a mechanical stop wherein an "on" or an "off" mirror position can be defined. The hinge materials having relatively high elastic constant can be selected for the non-contact micro mirrors, which allows the elastic restoring force to balance the electrostatic force and hold the mirror plate at a tilt angle that defines an "on" or an "off" mirror position. The elastic restoring force can also restore the tilted mirror plate to an un-tilted position after the electrostatic force is reduced or removed.

The above described micro mirror provides a simplified structure for a tiltable mirror plate on a substrate and methods for driving the tiltable mirror plate. The tiltable mirror plate can be tilted to and held at predetermined angles in response to electric signals provided by a controller. No mechanical stop is required on the substrate or on the mirror plate to stop the tilted mirror plate and define the tilt angles of the mirror plate. Eliminating mechanical stops not only simplifies a micro mirror device, but also removes the stiction that is known to exist between a mirror plate and mechanical stops in convention mirror devices. Mirror plate devices described herein may tilt to a narrower angle than mirror plates in conventional devices. Less mirror plate tilting can cause less strain on the hinge around which the mirror plate rotates. Such devices may be less likely to experience mechanical breakdown. Thus, the useful lifetime of the device may be longer. Further, because the hinge is not required to rotate as much as in conventional devices, a greater variety of materials may be selected for hinge formation. Moreover, because the mirror plate undergoes a smaller angular deflection, it can operate at higher frequencies.

It is understood that the disclosed methods are compatible with other configurations of micro mirrors. Different materials than those described above can be used to form the various layers of the mirror plate, the hinge connection post, the hinge support post, the electrodes and the mechanical stops. The electrodes can include several steps as shown in the figures, or a single layer of conductive material. The mirror plate can have different shapes such as, rectangular, hexagonal, diamond, or octagonal. The driving voltage pulses can include different waveforms and polarities. The display system can include different configurations and designs for the optical paths without deviating from the spirit of the present invention.

## Claims

1. A micro mirror device, comprising:
a hinge supported by a substrate; and
a mirror plate tiltable around the hinge, wherein the hinge comprises a material selected from the group consisting of a titanium-nickel alloy having a titanium composition between about 30% and 70%, a titanium-aluminum alloy having a titanium composition between about 30% and70%, an aluminum-copper alloy having a copper composition between about 5% and 20%, and an aluminum titanium nitride having a nitrogen composition between about 0 and 15%.

2. The micro mirror device of claim 1, wherein the hinge comprises the aluminum titanium nitride and the aluminum and the titanium in the aluminum titanium nitride have approximately equal compositions.

3. The micro mirror device of claim 1 or 2, wherein the hinge comprises the aluminum titanium nitride and the nitrogen composition in the aluminum titanium nitride is between about 0 and 10%.

4. A micro mirror device, comprising:
a hinge support post on a substrate;
a hinge connected to the hinge support post; and
a mirror plate tiltable around the hinge, wherein the hinge comprises a material selected from the group consisting of a titanium-nickel alloy having a titanium composition between about 30% and 70%, a titanium-aluminum alloy having a titanium composition between about 30% and 70%, an aluminum-copper alloy having a copper composition between about 5% and 20%, and an aluminum titanium nitride having a nitrogen composition between about 0 and 15%.

5. The micro mirror device of one of claims 1 to 4, wherein the mirror plate comprises a hinge layer that includes the hinge, wherein the hinge layer comprises substantially the same material as the hinge.

6. The micro mirror device of one of claims 1 to 5, wherein the hinge at least partially extends into a cavity in the lower surface of the mirror plate.

7. The micro mirror device of one of claims 4 to 6, wherein the hinge comprises the aluminum-titanium-nitrogen compound, and the aluminum and the titanium have approximately equal compositions and the nitrogen composition is between about 0 and 10%.

8. The micro mirror device of claim 1 or 4, wherein the hinge comprises the titanium-nickel alloy, and the titanium composition in the titanium-nickel alloy is between about 40% and 60%.

9. The micro mirror device of claim 8, wherein the titanium composition in the titanium-nickel alloy is between about 45% and 55%.

10. The micro mirror device of claim 1 or 4, wherein the hinge comprises the titanium-aluminum alloy, and the titanium composition in the titanium- aluminum alloy is between about 40% and 60%.

11. The micro mirror device of claim 10, wherein the titanium composition in the titanium- aluminum alloy is between about 45% and 55%.

12. The micro mirror device of claim 1 or 4, wherein the hinge comprises the aluminum-copper alloy and the aluminum composition in the aluminum-copper alloy is between about 70% and 95%.

13. The micro mirror device of one of claims 1 to 12, wherein the hinge is configured to elastically restore the mirror plate from a first orientation at or above 2 degrees relative to the surface of the substrate to a second orientation substantially parallel to the substrate.

14. The micro mirror device of claim 13, wherein the hinge is configured to elastically restore the mirror plate from a first orientation at or above 3 degrees relative to the surface of the substrate to a second orientation substantially parallel to the substrate.

15. The micro mirror device of claim 14, wherein the hinge is configured to elastically restore the mirror plate from a first orientation at or above 4 degrees relative to the surface of the substrate to a second orientation substantially parallel to the substrate.

16. The micro mirror device of one of claims 1 to 15, further comprising a controller configured to produce an electric signal to hold the mirror plate at an orientation at or above 2 degrees relative to the surface of the substrate.

17. The micro mirror device of claim 16, further comprising a controller configured to produce an electric signal to hold the mirror plate at an orientation at or above 3 degrees relative to the surface of the substrate.

18. The micro mirror device of claim 17, further comprising a controller configured to produce an electric signal to hold the mirror plate at an orientation at or above 4 degrees relative to the surface of the substrate.

19. The micro mirror device of one of claims 1 to 18, further comprising a mechanical stop on the substrate, wherein the mechanical stop is configured to contact the mirror plate to stop a tilt movement of the mirror plate.
